**Europäisches Patentamt**

**European Patent Office**

**Office européen des brevets**

(19)

(11) Veröffentlichungsnummer : **0 015 960**
**B1**

(12) **EUROPÄISCHE PATENTSCHRIFT**

(45) Veröffentlichungstag der Patentschrift :
**11.05.83**

(21) Anmeldenummer : **79900442.9**

(22) Anmeldetag : **01.05.79**

(86) Internationale Anmeldenummer :
**PCT/CH 79/00063**

(87) Internationale Veröffentlichungsnummer :
**WO WO/79010 (29.11.79 Gazettee 79/24)**

(51) Int. Cl.³ : **H 02 K 15/14, H 02 K 5/18,
F 16 B 4/00**

(54) STATORGEHÄUSE FÜR LUFTGEKÜHLTE ELEKTRISCHE MASCHINE.

(30) Priorität : **03.05.78 CH 4860/78**

(43) Veröffentlichungstag der Anmeldung :
**01.10.80 Patentblatt 80/20**

(45) Bekanntmachung des Hinweises auf die Patenterteilung : **11.05.83 Patentblatt 83/19**

(84) Benannte Vertragsstaaten :
**FR**

(56) Entgegenhaltungen :
**CH A 146 366**
**DE A 1 538 727**
**DE A 2 226 554**
**DE C 388 676**
**FR A 2 145 704**
**US A 1 884 573**

(73) Patentinhaber : **ZSCHOKKE WARTMANN AG**
**Stahlrain**
**CH-5200 Brugg (CH)**

(72) Erfinder : **MEIER, Albert**
**Im Talacker**
**CH-5622 Waltenschwil (CH)**

(74) Vertreter : **Meyer, Reinhard, Dipl.-Ing.**
**c/o Dr. A. R. EGLI & CO Patentanwälte Postfach 473**
**CH-8034 Zürich (CH)**

## Statorgehäuse für luftgekühlte elektrische Maschine

Die Erfindung betrifft ein Statorgehäuse für eine luftgekühlte elektrische Maschine, das aus einem zum Aufsitzen auf einem Statorkern bestimmten Blechmantel mit einer Anzahl angeformter, sich axial erstreckender, radial abragender und in Umfangsrichtung voneinander distanzierter Kühlrippen besteht.

Es ist ein Statorgehäuse für luftgekühlte elektrische Maschinen bekannt (DE-A-22 26 554), von dem eine Ausführungsform einen kleineren Innendurchmesser aufweist als der Aussenumfang und deshalb beim Aufbringen auf den Statorkern aufgeweitet wird. Damit kann zwar eine satte Verbindung zwischen dem Statorgehäuse und dem Ständerpaket erreicht werden, da aber die Enden des Statorgehäuses erheblich über das Ständerpaket ragen und damit in ihrem Durchmesser im wesentlichen unverändert bleiben, wird der Mantel des Statorgehäuses nur in der Mitte aufgeweitet. Es entsteht somit eine tonnenartige Verformung des Mantelgehäuses, so dass eine satte Auflage des Mantels nur an den Rändern des Ständerpaketes gewährleistet ist.

Der Erfindung liegt die Aufgabe zugrunde, ein Statorgehäuse der eingangs beschriebenen Art so auszugestalten, dass beim Aufpressen des Statorgehäuses auf den Statorkern eine gleichmässige, satte Auflage über dem gesamten Berührungsflächenbereich zwischen Statorgehäuse und -kern erreicht wird. Dies wird gemäss der Erfindung dadurch gelöst, dass die innere Mantelfläche des Blechmantels vor dem Aufsitzen auf dem Statorkern in axialer Richtung als konvexe Fläche ausgebildet ist, deren Innendurchmesser an beiden Enden des Blechmantels dem Aussendurchmesser des Statorkerns entsprechen, und der Blechmantel an beiden Enden das Aufweiten der stirnseitigen Manteldurchmesser beim Einpressen des Statorkerns verhindernde, an sich bekannte Versteifungen aufweist.

Durch diese Massnahmen ist es nunmehr möglich, dass dann bei eingepresstem Statorkern im Statorgehäuse die innere Mantelfläche der zwischen den Kühlrippen liegenden Mantelpartien des Statorgehäuses derart gleichmässig fest über ihre ganze Flächenausdehnung auf dem Statorkern aufsitzt, dass Statorgehäuse und Statorkern praktisch eine Einheit bilden, bei welcher eine optimale Wärmeübertragung gewährleistet ist und das Statorgehäuse die Forderung nach Selbsttragefähigkeit voll erfüllt.

Die konvexe Ausgestaltung des Statorgehäuses bewirkt dabei eine Vorspannung, die beim Einpressen des Statorkerns dafür sorgt, dass ein genügender praktisch gleichmässig über die ganze Berührungsflächenausdehnung verteilter Anpressdruck vom Statorgehäuse auf den Statorkern ausgeübt wird.

Die randnahen, ein Aufweiten der inneren Randdurchmesser des Statorgehäuses beim Einpressen des Statorkerns verhindernden Versteifungen können dabei äussere und/oder innere Stützringe sein, welche dann randnahe mit dem Blechmantel, z. B. mit Schweissungen, verbunden sind.

Es ist aber auch möglich, dass die Versteifungen durch randnahe Schweissverbindungen an der Basis der Kühlrippen gebildet sind.

Ferner betrifft die Erfindung eine luftgekühlte elektrische Maschine mit einem erfindungsgemässen Statorgehäuse, bei dem die innere Mantelfläche des Blechmantels mit den zwischen den Kühlrippen liegenden Mantelpartien gleichmässig fest auf der Umfangsfläche des Statorkerns aufsitzt.

Eine vorzugsweise Ausgestaltung besteht darin, dass zwischen dem Blechmantel und dem Statorkern ein sich axial erstreckender, drehfest angeordneter Keil vorgesehen ist.

Zweckmässig können die Maschinenfüsse an einem am Statorkern anliegenden Teil des Statorgehäuses abgestützt und mit diesem Teil mindestens teilweise mit dem Statorkern verschweisst sein.

Weiter betrifft die Erfindung ein Verfahren zur Herstellung der erfindungsgemässen Maschine, bei dem der Blechmantel mit Versteifungsflanschen versehen und anschliessend der Statorkern in den Blechmantel eingepresst wird.

Beispielsweise Ausführungsformen des Erfindungsgegenstandes werden nachfolgend anhand der Zeichnung näher erläutert.

Es zeigen :

Figur 1a ein Statorgehäuse mit einem Stator, im Axialschnitt ;

Figur 1b getrennt ein Statorgehäuse und einen Stator, im Axialschnitt ;

Figur 2 ein Statorgehäuse mit Stützringen, im Axialschnitt ;

Figuren 3 und 4 Stirnansichten von zwei unterschiedlichen Ausführungsformen von Statoranordnungen einer luftgekühlten elektrischen Maschine ;

Figur 5 ausschnittweise eine Fusskonstruktion an einer Statorgehäuse- und kernanordnung ; und

Figuren 6, 7 und 8 ausschnittweise Ausführungsvarianten von Keilverbindungen zwischen einem Statorgehäuse und einem Statorkern.

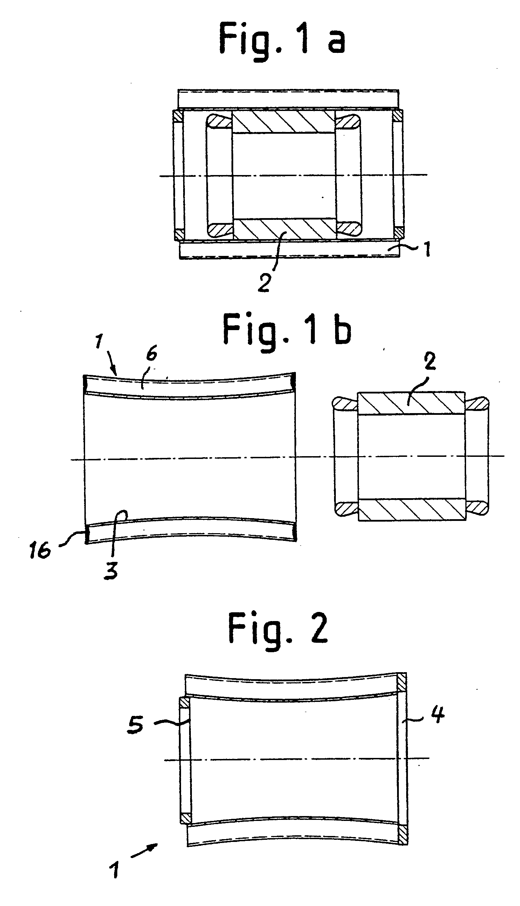

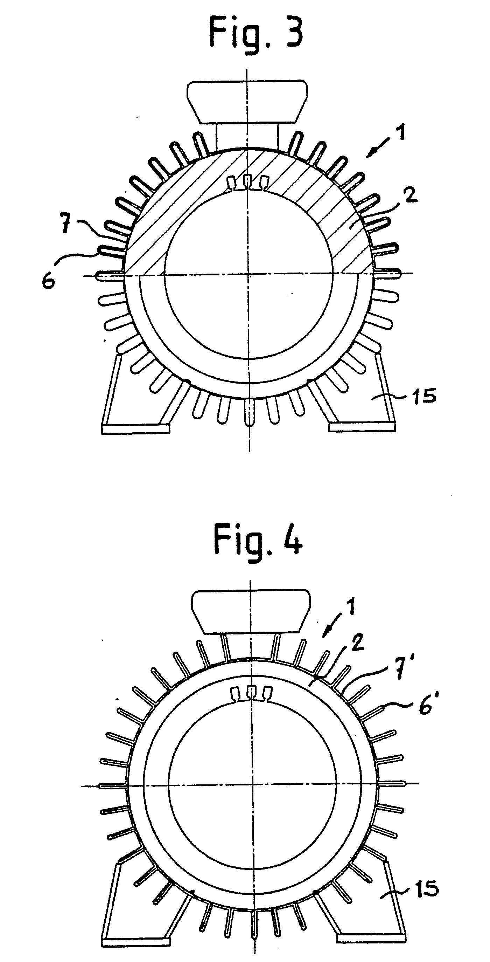

Aus der Fig. 1a geht schematisch eine Anordnung eines Statorgehäuses 1 mit einem Statorkern 2 hervor, wie diese Anordnung für den Stator einer luftgekühlten elektrischen Maschine, etwa gemäss den in Fig. 3 und 4 veranschaulichten Ausführungsformen, Verwendung findet, wobei der Stator durch eine Fusskonstruktion 15 auf dem Fundament abgestützt ist. Aus den Fig. 3 und 4 geht ferner hervor, dass das Statorgehäuse 1 aus einem Blechmantel mit einer Mehrzahl angeformter, sich axial erstreckender, radial abstehender und in Umfangsrichtung voneinander distanzierter Kühlrippen 6 bzw. 6' gebildet ist, wobei sich zwischen den Kühlrippen zur Anlage auf der Oberfläche des Statorkerns bestimmte Mantelpartien 7 bzw. 7' befinden, wie das im Einzelnen noch näher erläutert wird. Die Kühlrippen 6 können von offener Form (Fig. 3) oder von geschlossener (6') Form (Fig. 4) sein, wie dies allgemein bekannt ist und praktiziert wird.

Für die Montage von Statorgehäuse 1 und Statorkern 2 wird letzterer in das vorgeformte Statorgehäuse 1 eingepresst (Fig. 1b). Erfindungsgemäss ist hierfür die innere Mantelfläche 3 des Blechmantels 1 in axialer Richtung konvex ausgestaltet, wobei die inneren Randdurchmesser an beiden Enden des Blechmantels 1 dem Aussendurchmesser des Statorkerns 2 entsprechen. Hierbei ist der Blechmantel 1 an beiden Enden mit nachfolgend noch näher zu bezeichnenden Versteifungen versehen, welche beim Einpressen des Statorkerns 2 in den Blechmantel 1 ein Aufweiten dessen Randdurchmesser verhindern. Das vorgeformte Statorgehäuse 1 besitzt somit eine Vorspannung derart, dass sich beim Aufpressen die innere Mantelfläche der zwischen den Kühlrippen 6 liegenden Mantelpartien 7 absolut gleichmässig und fest mit vorgegebenem Anpressdruck über deren gesamte Flächenausdehnung an die Oberfläche des Statorkerns 2 anlegt, wodurch in vorgegebenem Masse die gestellten Anforderungen an Wärmeübertragungsfähigkeit und Momentaufnahme erfüllt werden. Zudem gestattet diese vorbeschriebene Technik eine De- und Wiedermontage zwischen Statorgehäuse 1 und Statorkern 2.

Die genannten Versteifungen können gemäss Fig. 1b randnahe Schweisspunkte 16 an der Basis oder über die ganze Höhe der Kühlrippen 6 sein. Gemäss Fig. 2 werden die Versteifungen durch einen äusseren Stützring 4 und einen inneren Stützring 5 gebildet, wobei natürlich auch entweder zwei äussere oder zwei innere Stützringe Verwendung finden könnten. Diese Stützringe dienen gleichzeitig als Träger der Lagerschilder der Maschine (nicht dargestellt).

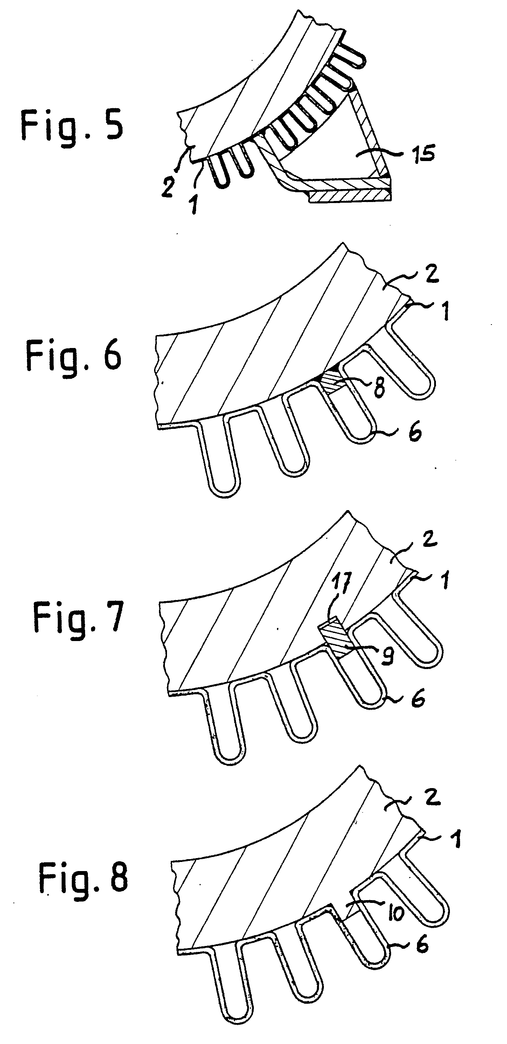

Fig. 5 zeigt nun, dass zur Anbringung der Fusskonstruktion 15 zweckmässig eine Kühlrippe am Umfang des Statorgehäuses 1 ausgelassen und dort der Maschinenfuss zweckmässig durch das Statorgehäuse 1 hindurch mit dem Statorkern 2 verschweisst. Dies bildet natürlich nur eine von einer ganzen Reihe von Möglichkeiten der Ausgestaltung und Anbringung von Fusskonstruktionen.

Für grössere Maschinen ist es oft zweckmässig, zwischen Statorgehäuse 1 und Statorkern 2 eine zusätzliche, sich axial erstreckende Keilverbindung vorzusehen zur Herstellung einer Formschlüssigkeit in Umfangsrichtung. In den Fig. 6, 7 und 8 sind solche Verbindungen veranschaulicht. Bei der Anordnung gemäss Fig. 6 sind am Umfang des Statorkerns 2 verteilt sich axial erstreckende Flachprofilstäbe 8 aufgeschweisst, welche dann bei der Montage in die betreffenden offenen Kühlrippen 6 eingreifen und gleichzeitig dazu dienen können, die einzelnen Blechlamellen des Statorkerns zusammenzuhalten. Diese Keilverbindung dient der axialen Führung bei der Montage und verunmöglicht Relativverdrehungen zwischen Statorgehäuse und Statorkern. Bei der Anordnung gemäss Fig. 7 hingegen greifen Flachprofilstäbe 9 sowohl in eine entsprechende Nut 17 im Statorkern 2 als auch in eine betreffende offene Kühlrippe 6 am Statorgehäuse 1 ein. Hierbei kann der Flachprofilstab 9 etwa mit der Kühlrippe 6 verschweisst sein. Bei der Anordnung gemäss Fig. 8 hingegen ragen vom Statorkern 2 Profilnocken 10 ab, welche in entsprechende Hohl-Kühlrippen 6 im Statorgehäuse 1 eingreifen.

Das vorbeschriebene Statorgehäuse wird in der Regel aus einem Blech vorgeformt, wobei die Kühlrippen durch Stempel-bzw. Prägewerkzeuge maschinell ausgebildet werden. Durch entsprechende Bombierung dieser Werkzeuge ist es nun möglich, die vorbeschriebene Konvexität der inneren Mantelfläche im gleichen Arbeitsgang herzustellen.

## Ansprüche

1. Statorgehäuse für eine luftgekühlte elektrische Maschine, das aus einem zum Aufsitzen auf einem Statorkern bestimmten Blechmantel mit einer Anzahl angeformter, sich axial erstreckender, radial abragender und in Umfangsrichtung von einander distanzierter Kühlrippen besteht, dadurch gekennzeichnet, dass die innere Mantelfläche (3) des Blechmantels (1) vor dem Aufsitzen auf dem Statorkern in axialer Richtung als konvexe Fläche ausgebildet ist, deren Innendurchmesser an beiden Enden des Blechmantels dem Aussendurchmesser des Statorkerns entsprechen, und der Blechmantel (1) an beiden Enden das Aufweiten der stirnseitigen Manteldurchmesser beim Einpressen des Statorkerns verhindernde, an sich bekannte Versteifungen (4, 5) aufweist.

2. Statorgehäuse nach Anspruch 1, dadurch gekennzeichnet, dass die Versteifungen aussenseitige (4) und/oder innenseitige Stützflanschen (5) sind, die randnah mit dem Blechmantel (1) verbunden sind, z. B. durch Schweissungen.

3. Statorgehäuse nach Anspruch 1, dadurch gekennzeichnet, dass die Versteifungen durch randnahe Schweissverbindungen an der Basis der Kühlrippen gebildet sind.

4. Luftgekühlte elektrische Maschine mit einem Statorgehäuse nach Anspruch 1, dadurch gekennzeichnet, dass die innere Mantelfläche des Blechmantels (1) mit den zwischen den Kühlrippen (6) liegenden Mantelpartien (7, 7') gleichmässig fest auf der Umfangsfläche des Statorkerns (2) aufsitzt.

5. Maschine nach Anspruch 4, dadurch gekennzeichnet, dass zwischen dem Blechmantel (1) und dem Statorkern (2) ein sich axial erstreckender, drehfest angeordneter Keil (8, 9, 10) vorgesehen ist.

6. Maschine nach Anspruch 4, dadurch gekennzeichnet, dass die Maschinenfüsse (15) an einem am Statorkern (2) anliegenden Teil (7, 7') des Statorgehäuses (1) abgestützt und mit diesem Teil mindestens teilweise mit dem Statorkern (2) verschweisst sind.

7. Verfahren zur Herstellung der Maschine nach Anspruch 4, dadurch gekennzeichnet, dass der Blechmantel (1) mit Versteifungsflanschen (4, 5) versehen und anschliessend der Statorkern in den Blechmantel eingepresst wird.

## Claims

1. Stator casing for an air-cooled electrical machine, which comprises a sheet metal jacket to be placed on the stator core and has a plurality of integrally formed, axially extending, radially projecting and peripherally spaced cooling ribs, characterised in that the inner surface (3) of the sheet metal jacket (1) is made axially convex before mounting onto the stator core and the inner diameter at both ends of the sheet metal jacket corresponds to the outside diameter of the stator core, and at both ends the sheet metal jacket (1) has reinforcements (4, 5) known as such which prevent an enlargement of the end diameter on pressing in the stator core.

2. Stator casing according to claim 1, characterised in that the reinforcements are outer (4) and/or inner (5) thrust rings, which are connected to the sheet metal close to the edge, e. g. by welds.

3. Stator casing according to claim 1, characterised in that the reinforcements are formed by welded joints, close to the edge, on the base of the cooling rib.

4. An air-cooled electrical machine haering a stator casing according to claim 1, characterised in that the inner surface of the sheet metal jacket (1) with the jacket (7, 7') located between the cooling rib (6) is mounted uniformly and firmly on the peripheral surface of the stator core (2).

5. Machine according to claim 4, characterised in that an axially extending keyed joint (8, 9, 10) is provided between the sheet metal jacket (1) and the stator core (2).

6. Machine according to claim 4, characterised in that the machine supports (15) are supported on a part (7, 7') of the stator casing (1) adjacent to the stator core and are welded together with said part at least partially to the stator core (2).

7. Method for the manufacture of the machine according to claim 4, characterised in that the sheet metal jacket (1) is provided with reinforcing rings (4, 5) and subsequently the stator core is pressed into the sheet metal jacket.

## Revendications

1. Enveloppe statorique pour machine électrique refroidie par air, qui est constituée par une chemise en tôle destinée à être montée sur le noyau d'un stator et comportant un certain nombre de nervures de refroidissement obtenues par formage, orientées dans le sens axial, faisant saillie dans le sens radial et situées à une certaine distance les unes des autres dans le sens périphérique, caractérisée en ce que avant sa mise en place sur le noyau du stator on donne à la surface intérieure (3) de la chemise en tôle (1) la forme d'une surface convexe dans le sens axial dont les diamètres intérieurs au niveau des deux extrémités de la chemise en tôle correspondent au diamètre extérieur du noyau du stator et en ce que la chemise en tôle (1) comporte, à ses deux extrémités, des dispositifs de raidissement connus (4, 5) empêchant tout élargissement du diamètre de la chemise au niveau de ses sections frontales lors de l'introduction par pression du noyau du stator.

2. Enveloppe statorique selon la revendication 1, caractérisée en ce que les dispositifs de raidissement sont des brides d'appui extérieures (4) et/ou intérieures (5) qui sont reliées à la chemise en tôle (1) à proximité de ses bords, par exemple par soudage.

3. Enveloppe statorique selon la revendication 1, caractérisée en ce que les dispositifs de raidissement sont constitués par des soudures exécutées à proximité des bords au niveau de la base des nervures de refroidissement.

4. Machine électrique refroidie par air comportant une enveloppe statorique selon la revendication 1, caractérisée en ce que la surface intérieure de la chemise en tôle (1) s'applique d'une manière uniformément serrée, notamment par ses parties (7, 7') situées entre les nervures de refroidissement (6), sur la surface du périmètre du noyau de stator (2).

5. Machine selon la revendication 4, caractérisée en ce que entre la chemise en tôle (1) et le noyau de stator (2) on engage un coin (8, 9, 10) orienté dans le sens axial et monté de manière à ne pas pouvoir tourner.

6. Machine selon la revendication 4, caractérisée en ce que les pieds (15) de la machine sont montés sur une partie (7, 7') de l'enveloppe statorique (1) en contact avec le noyau de stator (2) et soudés au moins partiellement avec cette partie au noyau (2) du stator.

7. Procédé de réalisation de la machine selon la revendication 4, caractérisé en ce que après avoir muni la chemise en tôle (1) de brides de raidissement (4, 5) on introduit par pression le noyau du stator dans la chemise en tôle.

# Fig. 1 a

2
1

# Fig. 1 b

1
6
2
16
3

# Fig. 2

5
4
1

# Fig. 3

# Fig. 4

Fig. 5

Fig. 6

Fig. 7

Fig. 8